**Europäisches Patentamt**

**European Patent Office**

**Office européen des brevets**

(19)

(11) Veröffentlichungsnummer: **0 184 628**
**B1**

(12) **EUROPÄISCHE PATENTSCHRIFT**

(45) Veröffentlichungstag der Patentschrift: **30.01.91**

(51) Int. Cl.⁵: **G 01 D 5/34**

(21) Anmeldenummer: **85112649.0**

(22) Anmeldetag: **05.10.85**

(54) **Abtastkopf für Schrittgeber, insbesondere Winkelschrittgeber.**

(30) Priorität: **08.12.84 DE 3444878**

(43) Veröffentlichungstag der Anmeldung:
**18.06.86 Patentblatt 86/25**

(45) Bekanntmachung des Hinweises auf die
Patenterteilung:
**30.01.91 Patentblatt 91/05**

(84) Benannte Vertragsstaaten:
**DE FR GB**

(56) Entgegenhaltungen:
**WO-A-84/01057**
**DE-A-2 948 072**
**DE-A-3 306 790**

(73) Patentinhaber: **Bodenseewerk Gerätetechnik
GmbH
Alte Nussdorfer Strasse 15 Postfach 1120
D-7770 Überlingen/Bodensee (DE)**

(72) Erfinder: **Jansen, Dirk, Dr.
Barbelgängle 27
D-7770 Überlingen (DE)**
Erfinder: **Schmid, Günter
Rauensteinstrasse 124
D-7770 Überlingen (DE)**
Erfinder: **Kordulla, Hans
Schillerstrasse 4
D-7700 Singen (DE)**

(74) Vertreter: **Weisse, Jürgen, Dipl.-Phys. et al
Patentanwälte Dipl.-Phys. Jürgen Weisse Dipl.-
Chem. Dr. Rudolf Wolgast Bökenbusch 41
Postfach 11 03 86
D-5620 Velbert 11 Langenberg (DE)**

EP 0 184 628 B1

**Beschreibung**

Die Erfindung betrifft einen Abtastkopf, für Schrittgeber, insbesondere Winkelschrittgeber, enthaltend

(a) Lichtquellenmittel und eine Kollimatoroptik zur Erzeugung eines von der Lichtquellenmitteln ausgehenden, parallelen Lichtbündels,

(b) ein feststehendes Gitter im Strahlengang des parallelen Lichtbündels,

(c) eine bewegliche Scheibe, die in den Strahlengang des Lichtbündels hineinragt und ein bewegliches Gitter bildet, das im Bereich des Lichtbündels im wesentlichen parallel zu dem festehenden Gitter verläuft und dessen Teilung im wesentlichen mit der des feststehenden Gitters übereinstimmt, und

(d) Detektormittel, die auf der den Lichtquellenmitteln abgewandten Seite der Scheibe angeordnet und von dem Lichtbündel beaufschlagt,

(e) die Lichtquellenmittel von wenigstens einer auf einen Schaltkreis aufgebrachten integrierten Lichtquelle gebildet sind,

(f) der Schaltkreis und die Lichtquelle in einem Gehäuse angeordnet sind, dessen Deckel die als wenigstens eine kurzbrennweitige Linse ausgebildete Kollimatoroptik enthält,

(g) die Detektormittel wenigstens einen Detektor enthalten, welcher auf einen Hybridschaltkreis mit wenigstens einem Verstärker aufgeschaltet ist.

Ein solcher Abtastkopf ist aus der DE—A—3 306 790 und der den gleichen Gegenstand darstellenden DE—A—2 948 072 bekannt. Bei dieser Vorrichtung sind die Lichtquellenmittel, die dazugehörige Kollimatoroptik die bewegliche Scheibe und die Detektormittel in einem gemeinsamen Gehäuse angeordnet, sodaß erhebliche Gehäuseabmessungen und -gewicht in Kauf genommen werden müssen. Diese Abmessungen sind durch die Anordnung der beweglichen Scheibe im Gehäuseinneren bedingt und ein sehr stabil ausgebildetes Gehäuse von entsprechend hohem Gewicht ist erforderlich, um eine dauerhafte Justierung der Lichtquellenmittel und der Detektormittel, die an verschiedenen Stellen mit dem Gehäuse verbunden sind, zu ermöglichen.

Eine solche Ausbildung ist in manchen Anwendungsfällen zu groß. Außerdem widersteht diese Anordnung nicht im wünschenswerten Maße extremen Umweltbedingungen, wie beispielsweise stark schwankenden Temperaturen, Temperaturschockbeanspruchungen, Vibrationen und hohen Beschleunigungen.

Der Erfindung liegt die Aufgabe zugrunde, einen Abtast Kopf für Schrittgeber der eingangs genannten Art klein und kompakt auszuführen, gegenüber extremen Umweltbedingungen unempfindlich zu machen, mit geringem Aufwand zu montieren und zu justieren und durch Erzielen einer hohen Grenzfrequenz für hohe Geschwindigkeit bei hoher Winkelauflösung auszulegen.

Erfindungsgemäss wird diese Aufgabe mit einem Abtastkopf der eingangs genannten Art gelöst, bei dem

(h) die Lichtquelle mit dem Schaltkreis in einem hermetisch dicht abgeschlossenen, flachen Hybridgehäuse angeordnet ist,

(i) der bzw. die Detektoren mit dem Hybridschaltkreis in einem hermetisch dicht abgeschlossenen Hybridgehäuse angeordnet ist bzw. sind,

(j) das Hybridgehäuse, das den Hybridschaltkreis und den bzw. die Detektoren enthält, durch einen das feststehende Gitter bildenden Deckel abgeschlossen ist,

(k) das Hybridgehäuse, das den Hybridschaltkreis und den bzw. die Detektoren enthält, ein Gehäuseunterteil aufweist, mit dem eine Leiste verbunden ist,

(l) das Hybridgehäuse des Senderteils unter Zwischenlage eines Abstandstücks mit der Leiste 56 verbunden ist, so dass beide Hybridgehäuse in festem Abstand von einander gehalten, und

(m) die bewegliche Scheibe zwischen die Hybridgehäuse ragt.

Ein Hybridschaltkreis ist bekanntlich ein Mikroschaltkreis, bei welchem diskrete Bauteile und Halbleiterbauteile auf ein Netzwerk von passiven Bauteilen und Leitungen aufgebracht sind, das auf Keramik oder Glas aufgedampft ist (Graf "Modern Dictionary of Electronics" Howard W Sams u. Co. Inc., The Bobbs-Merrill Co., Inc. 4 Aufl. Seite 272). Solche Hybridschaltkreise sind in "Hybridgehäusen" eingeschlossen. Nach der Erfindung werden die Lichtquelle und der Detektor auf einen solchen Hybridschaltkreis aufgebracht und hermetisch in ein Hybridgehäuse eingeschlossen. Dadurch wird der Abtastkopf weitgehend unempfindlich gegen Umwelteinflüsse. Als Lichtquelle dient eine Leuchtdiode. Eine solche ist klein und unempfindlich gegen Vibrationen und Beschleunigungen. Allerdings ist ihre Lichtausbeute geringer als die einer üblicherweise benutzten Glühlampe. Es muß daher eine sehr kurzbrennweitige Kollimatoroptik benutzt werden, die einen möglichst großen Teil des von der Leuchtdiode ausgesandten Lichts erfaßt. Das wird dadurch ermöglicht, daß als Kollimatoroptik eine Linse im Deckel des flachen Hybridgehäuses dient. Der Detektor sitzt auf einem Hybridschaltkreis, der zugleich den Verstärker für das Detektorsignal bildet. Es fallen dadurch lange Leitungen mit den geschilderten Nachteilen fort, und es kann eine hohe Grenzfrequenz erreicht werden. Die ganze Anordnung wird sehr klein und kompakt und läßt sich leicht montieren und justieren.

Ausgestaltungen der Erfindung sind Gegenstand der abhängigen Ansprüche 2 und 3.

Ein Ausführungsbeispiel der Erfindung ist nachstehend unter Bezugnahme auf die zugehörigen Zeichnungen näher erläutert.

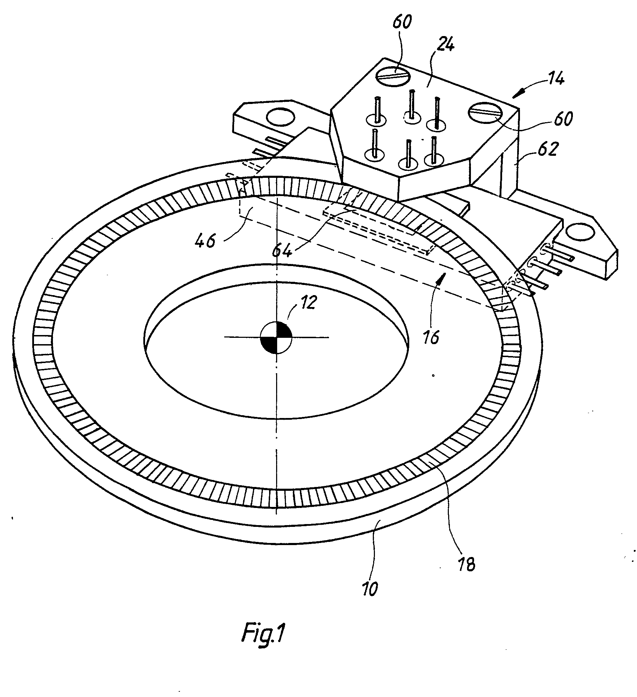

Fig. 1 ist eine perspektivische Darstellung eines Winkelschrittgebers mit einem Abtastkopf.

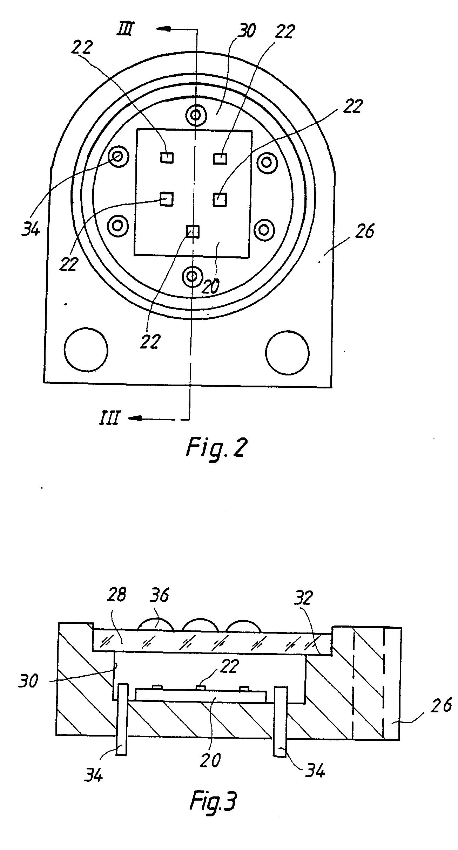

Fig. 2 zeigt den Senderteil des Abtastkopfes mit abgenommenem Deckel.

Fig. 3 zeigt einen Schnitt durch den Senderteil mit Deckel im wesentlichen längs der Linie III—III von Fig. 2.

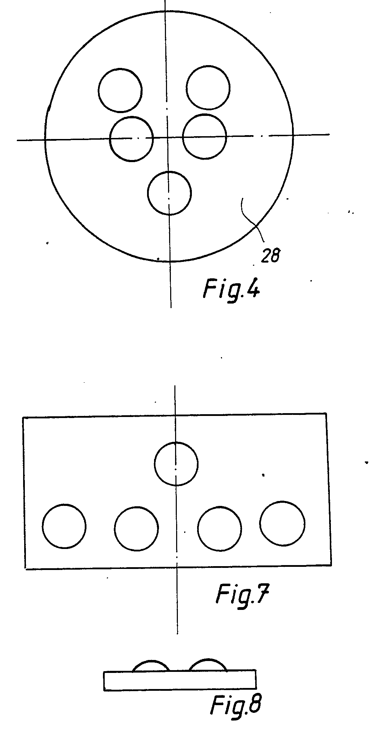

Fig. 4 ist eine Vorderansicht des Deckels.

Fig. 5 zeigt schematisch eine Draufsicht auf den Empfängerteil, wobei der Detektormittel und die Verstärker schaltungsmäßig angedeutet sind.

Fig. 6 zeigt einen Schnitt durch den Empfängerteil im wesentlichen längs der Linie VI—VI von Fig. 5.

Fig. 7 zeigt eine abgewandelte Form des Deckels für einen Senderteil mit einer anderen Anordnung der Leuchtdioden.

Fig. 8 ist eine zugehörige Endansicht.

Ein Winkelschrittgeber enthält eine Scheibe 10, die um eine Achse 12 drehbar ist, einen Senderteil 14 und einen Empfängerteil 16. Die Scheibe 10 weist ein ringförmiges, fein geteiltes Gitter 18 mit radialen Gitterstegen auf. Das Gitter 18 weist beispielsweise 8000 Gitterstege oder Inkremente pro Umdrehung auf. Der Senderteil 14 enthält einen Hybridschaltkreis 20 auf den fünf Leuchtdioden 22 aufgebracht sind. Die Leuchtdioden 22 mit dem Hybridschaltkreis 20 sitzen in einem flachen, hermetisch abgeschlossenen Hybridgehäuse 24. Das Hybridgehäuse 24 weist einen Gehäuseunterteil 26 und einen Deckel 28 auf. Der Gehäuseunterteil 26 bildet eine Vertiefung 30, an die sich eine ringförmige Schulter oder Auflagefläche 32 anschließt. Der Deckel 28 sitzt abdichtend auf der Schulter 32. Der Hybridschaltkreis 20 sitzt auf dem Grunde der Vertiefung 30. Mit 34 sind isoliert herausgeführte Anschlußstifte bezeichnet.

Der Deckel 28 enthält fluchtend mit den Leuchtdioden 22 fünf kurzbrennweitige Linsen 36, die als Kollimatoroptik dienen. Die Leuchtdioden 22 sitzen in den Brennpunkten der Linsen, so daß jede Leuchtdiode 22 und Linse 36 ein paralleles Lichtbündel erzeugt.

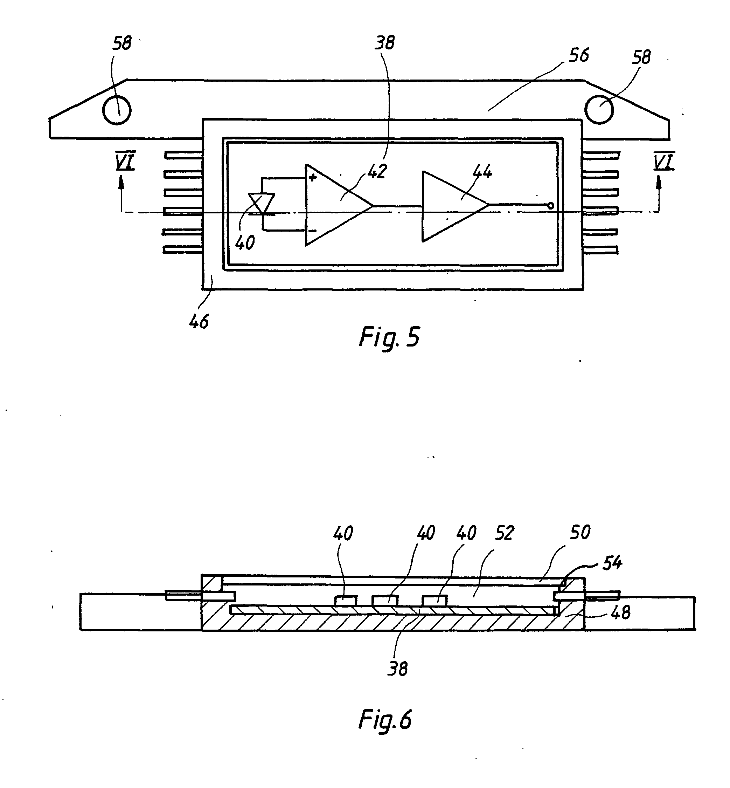

Die parallelen Lichtbündel fallen durch das ringförmige geteilte Gitter 18 der Scheibe 10 auf den Empfängerteil 16. Der Empfängerteil 16 enthält einen Hybridschaltkreis 38. Der Hybridschaltkreis 38 trägt Detektoren 40 in Form von Photodioden, wie in Fig. 5 angedeutet ist. Der Hybridschaltkreis 38 enthält auch, wie ebenfalls in Fig. 5 angedeutet ist, für jeden der Detektoren 40 einen Verstärker 42 und eine Schaltstufe 44. Der Hybridschaltkreis 38 mit den Detektoren 40 sitzt in einem flach-quaderförmigen Hybridgehäuse 46. Das Hybridgehäuse 46 weist einen Gehäuseunterteil 48 und einen Deckel 50 auf. Der Gehäuseunterteil 48 bildet eine Vertiefung 52, an die sich eine Schulter oder Auflagefläche 54 anschließt. Der Deckel 50 liegt abdichtend auf der Auflagefläche 54 auf. An dem Hybridgehäuse sitzt eine Leiste 56 mit Befestigungslöchern 58.

Das Hybridgehäuse 24 des Senderteils 14 ist durch Schrauben 60 unter Zwischenlage eines Abstandsstücks 62 mit der Leiste 56 verbunden. Die beiden Hybridgehäuse 24 und 46 sind somit in festem Abstand voneinander gehalten. Die Scheibe 10 ragt zwischen diese beiden Hybridgehäuse 24 und 46.

Der Deckel 50 des Hybridgehäuses 46 ist als feststehendes Gitter 64 mit radialen Gitterstegen ausgebildet. Die parallelen Lichtbündel fallen somit durch das bewegliche Gitter 18 der Scheibe 10 und das von dem Deckel 50 gebildete feststehende Gitter 64 auf die Detektoren 40. Dabei fluchtet jeweils ein Detektor 40 mit einer der Leuchtdioden 22.

Statt der auf einen Hybridschaltkreis aufgebrachten Leuchtdioden kann auch ein monolithisches Leuchtdiodenchiparray vorgesehen sein. Die Detektoren können statt von Photodioden auch von anderen Photoempfängern wie Photoelementen oder Photowiderständen gebildet sein. Die Linsen können Fresnellinsen sein.

Fig. 7 und 8 zeigt eine andere Ausführung des Senderteils, die durch eine andere Anordnung der Leuchtdioden und Linsen gekennzeichnet ist.

**Patentansprüche**

1. Abtastkopf für Schrittgeber, insbesondere Winkelschrittgeber, enthaltend

(a) Lichtquellenmittel und eine Kollimatoroptik zur Erzeugung eines von den Lichtquellenmitteln ausgehenden, parallelen Lichtbündels,

(b) ein feststehendes Gitter im Strahlengang des parallelen Lichtbündels,

(c) eine bewegliche Scheibe, die in den Strahlengang des Lichtbündels hineinragt und ein bewegliches Gitter bildet, das im Bereich des Lichtbündels im wesentlichen parallel zu dem feststehenden Gitter verläuft und dessen Teilung im wesentlichen mit der des feststehenden Gitters übereinstimmt, und

(d) Detektormittel, die auf der den Lichtquellenmitteln abgewandten Seite der Scheibe angeordnet und von dem Lichtbündel beaufschlagt sind, wobei

(e) die Lichtquellenmittel von wenigstens einer auf einen Schaltkreis (20) aufgebrachten integrierten Lichtquelle (22) gebildet sind,

(f) der Schaltkreis (20) und die Lichtquelle (22) in einem Gehäuse (24) angeordnet sind, dessen Deckel (28) die als wenigstens eine kurzbrennweitige Linse (36) ausgebildete Kollimatoroptik enthält,

(g) die Detektormittel wenigstens einen Detektor (40) enthalten, welcher auf einen Hybridschaltkreis (38) mit wenigstens einem Verstärker (42) aufgeschaltet ist, dadurch gekennzeichnet, dass

(h) die Lichtquelle (22) mit dem Schaltkreis (20) in einem hermetisch dicht abgeschlossenen, flachen Hybridgehäuse (24) angeordnet ist,

(i) der bzw. die Detektoren (40) mit dem Hybridschaltkreis (38) in einem hermetisch dicht abgeschlossenen Hybridgehäuse (46) angeordnet ist bzw. sind,

(j) das Hybridgehäuse (46), das den Hybridschaltkreis (38) und den bzw. die Detektoren (40) enthält, durch einen das feststehende Gitter (64) bildenden Deckel (50) abgeschlossen ist,

(k) das Hybridgehäuse (46), das den Hybridschaltkreis (38) und den bzw. die Detektoren (40) enthält, ein Gehäuseunterteil (48) aufweist, mit dem eine Leiste (56) verbunden ist,

(l) das Hybridgehäuse (24) des Senderteils (14) unter Zwischenlage eines Abstandstücks (62) mit der Leiste (56) verbunden ist, so dass beide Hybridgehäuse (24, 46) in festem Abstand von einander gehalten sind,

(m) die bewegliche Scheibe (10) zwischen die Hybridgehäuse (24 und 46) ragt.

2. Abtastkopf nach Anspruch 1, dadurch gekennzeichnet, dass die integrierte Lichtquelle von einer Leuchtdiode (22) gebildet ist, die auf einen Hybridschaltkreis (20) aufgebracht ist.

3. Abtastkopf nach Anspruch 1, dadurch gekennzeichnet, dass die integrierte Lichtquelle ein Leuchtdiodenchiparray ist.

**Revendications**

1. Tête d'exploration pour des générateurs de pas, en particulier pour des générateurs de pas angulaires, comprenant

(a) des moyens de source lumineuse et un système optique collimateur déstiné à engendrer un faisceau lumineux parallèle partant des moyens de source lumineuse,

(b) un réseau stationnaire dans la voie des rayons du faisceau lumineux parallèle,

(c) un disque mobile s'étendant dans la voie des rayons du faisceau lumineux et formant un réseau mobile s'étendant dans le domaine du faisceau lumineux essentiellement parallèlement au réseau stationnaire et le partage duquel correspond essentiellement à celui du réseau stationnaire, et

(d) des moyens de détecteur disposés sur le côté du disque opposé aux moyens de source lumineuse et auxquels le faisceau lumineux est appliqué,

(e) les moyens de source lumineuse étant formés par au moins une source lumineuse (22) integrée attachée à un circuit de commutation (20),

(f) le circuit de commutation (20) et la source lumineuse (22) étant disposés dans un boîtier (24) dont le couvercle (28) comprend le système optique collimateur formé d'au moins une lentille (36) à courte distance focale,

(g) les moyens de détecteur comprenant au moins un détecteur (40) appliqué à un circuit hybride (38) ayant au moins un amplificateur (42), caractérisée par le fait que

(h) la source lumineuse (22) est disposée conjointement avec le circuit de commutation (20) dans un boîtier hybride (24) plat hérmétiquement étanchement fermé,

(i) le ou les détecteurs (40) sont disposés conjointement avec le circuit hybride (38) dans un boîtier hybride (46) fermé de manière hermétiquement étanche,

(j) le boîtier hybride (46) comprenant le circuit hybride (38) et le ou les détecteurs (40) est fermé par un couvercle (50) formant le réseau stationnaire (64),

(k) le boîtier hybride (46) comprenant le circuit hybride (38) et le ou les détecteurs (40) a un élément inférieur de boîtier (48) relié à un listel (56),

(l) le boîtier hybride (24) de l'élément transmetteur (14) est relié au listel avec une entretoise (62) interposée de sorte que les deux boîtiers hybrides (24, 46) sont tenus à écart fixe l'un de l'autre,

(m) le disque mobile (10) s'étend entre les boîtiers hybrides (24 et 46).

2. Tête d'exploration selon la revendication 1, caractérisée par le fait que la source lumineuse integrée est formée par une diode lumineuse (22) attachée à un circuit hybride (20).

3. Tête d'exploration selon la revendication 1, caractérisée par le fait que la source lumineuse integrée est un chip array de diode lumineuse.

**Claims**

1. Scanning head for step generators, particularly for angular step generators, comprising

(a) light source means and a collimator lens system for generating a parallel light beam originating from the light source means,

(b) a stationary lattice pattern in the path of rays of the parallel light beam,

(c) a movable disc which extends into the path of rays of the light beam and forms a movable lattice pattern which, in the area of the light beam, extends substantially parallelly to the stationary lattice pattern and the spacing of which substantially corresponds to the spacing of the stationary lattice pattern, and

(d) detector means which are arranged on the side of the disc remote from the light source means and which are exposed to the light beam, with

(e) the light source means being formed by at least one integrated light source (22) attached to a circuit (20),

(f) the circuit (20) and the light source (22) being arranged in a housing (24), the top cover (28) of which comprises the collimator lens system formed of at least one lens (36) of short focal length,

(g) the detector means comprising at least one detector (40) which is connected to a hybrid circuit (38) having at least one amplifier (42), characterized in that

(h) the light source (22) is arranged together with the circuit (20) in a hermetically tightly closed flat hybrid housing (24),

(i) the detector or detectors (40), respectively is or are, respectively, arranged together with the hybrid circuit (38) in a hermetically tightly closed hybrid housing (46),

(j) the hybrid housing (46) which contains the hybrid circuit (38) and the detector or detectors (40), respectively, is closed by a top cover (50) forming the stationary lattice pattern (64),

(k) the hybrid housing (46) which contains the hybrid circuit (38) and the detector or detectors (40), respectively, has a housing lower portion (48) to which a ledge (56) is connected,

(l) the hybrid housing (24) of the transmitter unit (14) is connected to the ledge (56) with a spacer (62) interposed, such that the two hybrid housings (24, 46) are held at a fixed distance from each other,

(m) the movable disc (10) extends between the hybrid housings (24 and 46).

2. Scanning head as set forth in claim 1, characterized in that the integrated light source is formed by a light emitting diode (22) which is attached to a hybrid circuit (20).

3. Scanning head as set forth in claim 1, characterized in that the integrated light source is a light emitting diode chip array.

Fig.1

Fig. 2

Fig.3

2.

28

Fig.4

Fig.7

Fig.8

Fig. 5

Fig. 6